# EUROPÄISCHE PATENTSCHRIFT

(11) **EP 2 242 623 B1**
(45) Veröffentlichungstag und Bekanntmachung des Hinweises auf die Patenterteilung: **26.08.2015**
(21) Anmeldenummer: 08863544.6
(22) Anmeldetag: 15.12.2008
(51) Int. Cl.: B25J 9/16, B23K 26/03, B23K 26/04

(54) **VERFAHREN UND EINRICHTUNG ZUM FÜGEN**
METHOD AND DEVICE FOR JOINING
PROCÉDÉ ET DISPOSITIF D'ASSEMBLAGE

(30) Priorität: 20.12.2007 DE 102007062535
(43) Veröffentlichungstag der Anmeldung: 27.10.2010
(73) Patentinhaber: KUKA Systems GmbH, 86165 Augsburg (DE)
(72) Erfinder: EBERL, Martin, 86199 Augsburg (DE); ENGLHARD, Anton, 86574 Petersdorf/Schönleiten (DE); HERRMANN, Manfred, 86633 Neuburg / Donau (DE)
(74) Vertreter: Ernicke, Klaus Stefan
(86) Internationale Anmeldenummer: PCT/EP2008/010640
(87) Internationale Veröffentlichungsnummer: WO 2009/080233

(56) Entgegenhaltungen:
- DE-A1- 10 335 501
- DE-A1- 19 913 756
- DE-B3- 10 326 377
- DE-C1- 4 402 345
- DE-U1-202006 005 916
- J. NORBERTO PIRES, ALTINO LOUREIRO AND GUNNAR BÖLMSJO: "Welding Robots: Technology, System Issues and Applications" 2006, SPRINGER-VERLAG LONDON LIMITED , LONDON , XP002522826 Seite 74 Seite 77 - Seite 84 Seite 109 - Seite 111

## Beschreibung

Die Erfindung betrifft ein Verfahren und eine Einrichtung zum Fügen von Werkstücken mit den Merkmalen im Oberbegriff des Verfahrens- und Vorrichtungshauptanspruchs.

Aus der DE 103 26 377 B3 ist ein Verfahren zum Laserschweißen eines Blechteils an einen Querschnitt eines Profils mittels verdeckter Schweißnähte bekannt. Hierbei wird zunächst der Querschnitt des dünnwandigen Profils mit einem als Bildverarbeitungssystem ausgebildeten Sensoriksystem erfasst, wobei das Bildverarbeitungssystem daraus die Schweißbahn errechnet. Die Werte der Bahn werden der Steuerung eines Schweißroboters eingegeben. Anschließend wird durch einen Roboter das Blechteil in Form eines Schottblech maßgerecht an die Stirnseite des dünnwandigen Profils angesetzt. Der Schweißroboter bewegt den Werkzeugkopf des Lasers entlang der Schweißbahn und verschweißt so das Schottblech mit dem dünnwandigen Profil mittels einer verdeckten T-Naht.

Die DE 103 35 501 A1 offenbart ein Verfahren und eine Vorrichtung zum Schweißen von Werkstücken entlang einer Werkstückkante mit einem von einem Roboter bewegten Laserkopf, der einen Laserstrahl auf den Prozessort fokussiert. Der Prozess wird von einem in den Strahlengang eingekoppelten optischen Erfassungssystem beobachtet. Die zu verfolgende Bahn kann vor dem Schweißprozess mit einem Laser-Messstrahl offline an ein oder mehreren einzelnen Bahnpunkten oder in ihrem teilweisen oder vollständigen Verlauf abgetastet werden. Bei unzureichendem Umgebungslicht kann eine Fremdlichtquelle zur Beleuchtung eingesetzt werden, wenn der Laserstrahl noch nicht gezündet ist.

Aus der Praxis ist es ferner bekannt, Bauteile mit Laserstrahl unter Bildung von Kehlnähten zu schweißen. Das Laserstrahlschweißen wird auch für Überlappstöße im Kantenbereich eingesetzt, wobei die Schweißnaht anhand der eng benachbarten Werkstückkante ermittelt wird. Hierbei gibt es immer einen genügend breiten Überlappungsbereich, so dass eine korrekte Schweißnaht kein Problem ist.

Es ist Aufgabe der vorliegenden Erfindung, eine verbesserte Fügetechnik mit breiteren Einsatzmöglichkeiten aufzuzeigen.

Die Erfindung löst diese Aufgabe mit den Merkmalen im Verfahrens- und Vorrichtungshauptanspruch.
Die beanspruchte Fügetechnik erlaubt es, auch dünne oder schmale Teile eines Werkstücks mit darüber liegenden breiteren Werkstückteilen verdeckt und vom breiteren Werkstückteil her zu fügen. Hierbei können insbesondere schmale Stege mit plattenförmigen Oberteilen verdeckt gefügt werden. Durch die vor dem Strahlfügen stattfindende Vermessung und Ausrichtung kann die Fügebahn sicher eingehalten werden, auch wenn beim Fügen selbst das schmale oder dünne Unterteil nicht mehr sichtbar ist und während des Verfolgens der Fügebahn mit dem energiereichen Strahl nicht mehr online gesucht oder kontrolliert werden kann.

Durch die Vermessung der vorgesehenen Fügebereiche der Werkstückteile, insbesondere Stege, können neben der Steglage und dem Stegverlauf auch Größe, insbesondere die Breite, und ggf. die Form der Stege erfasst werden. Hieraus lässt sich nicht nur der Verlauf der Fügebahn, insbesondere Schweißbahn, und deren Mittellage am Steg ermitteln, sondern auch die geeignete Größe, insbesondere der Durchmesser, des Fokus- oder Brennflecks des energiereichen Strahls und ggf. die Brennweiteneinstellung bestimmen. Der besagte Durchmesser kann an die Wandstärke des Stegs angepasst werden, um die Qualität der Fügeverbindung zu optimieren.

Durch die verdeckte Fügetechnik ist es möglich, auch schwierige Werkstückkonfigurationen zu fügen, bei denen ein Zugang der Fügestelle von der Seite des schmalen oder dünnen Unterteils aus nicht möglich oder nicht erwünscht ist.

Die beanspruchte Fügetechnik lässt sich in Verbindung mit unterschiedlichen Fügeverfahren einsetzen, wobei der energiereiche Strahl ebenfalls unterschiedlich ausgebildet sein kann, z.B. als Lichtstrahl, insbesondere Laserstrahl, als Elektronenstrahl oder dergleichen. Als Fügeverfahren kommt das Schweißen mit derartigen energiereichen Strahlen, aber auch das Löten, Kleben oder dergleichen andere Fügeverfahren in Betracht. Mit dem energiereichen Strahl können im Anbindungsquerschnitt auch Löcher durch die Teile der Querschnittpaarung gebohrt werden.

Die beanspruchte Fügetechnik bietet eine hohe Betriebssicherheit und Fügequalität. Die Anbindungsquerschnitte können sehr klein sein. Dies bringt auch Vorteile für das Ausgasen von Beschichtungen, z.B. Korrosionsschutz- oder Zinkbeschichtungen, an der Fügestelle mit sich. Durch das verdeckte Fügen vom Werkstückoberteil her kann das dünne oder schmale Unterteil geschont werden. Der Fügeprozess kann außerdem schnell von statten gehen. Hierfür ist eine Strahlablenkung durch kleine und schnelle Handachsenbewegungen eines Manipulators oder durch eine optische Einrichtung, insbesondere einer Scanneroptik mit ein oder mehreren schwenkbaren Spiegeln oder dergleichen von Vorteil.

Die optische Einrichtung erlaubt außerdem eine Änderung der Brennweite für den emittierten energiereichen Strahl. Hierdurch können z.B. durch die Strahlauslenkung bedingte Änderungen des Arbeitsabstandes kompensiert werden. Andererseits ist auch ein bewusstes Defokussieren möglich. Ferner kann mit der optischen Einrichtung auch bei Bedarf die Größe des Brennflecks bzw. der Auftreffstelle des Strahls auf der Werkstückoberfläche beeinflusst werden. Dies kann unabhängig davon geschehen, ob sich zugleich die Brennweite ändert oder konstant bleibt. Bei Brennweitenänderungen kann andererseits die Brennflächengröße konstant gehalten werden.

Für die genaue Vermessung des Werkstückunterteils ist es vorteilhafterweise vorgesehen, die Messeinrichtung mit dem Manipulator mitzuführen. Dies verbessert die Genauigkeit gegenüber einer externen und z.B. stationären Messvorrichtung. Von besonderem Vorteil ist es, dass die Messeinrichtung derart angeordnet ist, dass sie in Richtung des energiereichen Strahls wirkt. Hierdurch kann der für die Fügebahn maßgebliche Werkstückbereich direkt und mit gleicher Ausrichtung wie der energiereiche Strahl vermessen werden. Besonders günstig ist der Einsatz einer optischen Erfassungseinrichtung, die in den Strahlengang eingekoppelt werden kann. Sie blickt fluchtend mit dem Strahl auf das zu vermessende Werkstück. Dies bietet eine weitere Steigerung der Messgenauigkeit.

Die optische Erfassungseinrichtung ist bevorzugt als Digitalkamera ausgebildet und besitzt eine Bildaufnahmeeinrichtung in Form eines Bildsensors oder Chips mit einer dichten Pixelmatrix und einer hohen Auflösung. Hiermit kann durch ein Sichtfenster oder ein Messfeld ein größerer Ausschnitt des zu vermessenden Werkstücks aufgenommen und vermessen werden. Hierfür kann eine Bildauswertung vorhanden sein, die aus dem aufgenommenen Bild die relevanten Merkmale des zu vermessenden Unterteils, insbesondere die Form, Lage und Ausrichtung sowie den Abstand ermittelt. Aus diesen Merkmalen kann aus der Bildauswertung auch gleich die Soll-Lage der Fügebahn ermittelt werden. Die Messergebnisse und ggf. auch die ermittelten Daten der Fügebahn können an die Manipulatorsteuerung oder eine andere geeignete Steuerung zur Beeinflussung und Führung des energiereichen Strahls übermittelt werden.

Mit der beanspruchten Messtechnik kann einerseits das Werkstück-Unterteil und/oder die Soll-Lage der Fügebahn gesucht werden. Alternativ können die Messergebnisse und die ermittelten Daten mit einer in der Manipulatorsteuerung vorprogrammierten Fügebahn verglichen werden, wobei die vorprogrammierte Bahn beim Auftreten von Abweichungen entsprechend korrigiert und nachgeführt wird. In allen Varianten ergibt sich eine optimale Ermittlung der Soll-Lage der Fügebahn, die dann beim verdeckten Fügen mit größtmöglicher Sicherheit vom energiereichen Strahl verfolgt werden kann.

Die Messgenauigkeit wird durch eine geeignete Ausleuchtung des Messbereichs verbessert. Hierfür ist eine vom Manipulator mitgeführte Beleuchtungseinrichtung vorgesehen, die auf den Messbereich gerichtet ist. Die Anordnung von mehreren, aus verschiedenen Richtungen einstrahlenden Leuchtelementen bietet den Vorteil, dass die Konturenschärfe der relevanten Bezugspunkte des Werkstück-Unterteils, z.B. der Kanten am freien und zu fügenden Ende eines Stegs, verbessert wird. Schattenbildungen, die möglicherweise das Messergebnis beeinträchtigen könnten, werden somit vermieden oder zumindest minimiert.

In den Unteransprüchen sind weitere vorteilhafte Ausgestaltungen der Erfindung angegeben.

Die Erfindung ist in den Zeichnungen beispielsweise und schematisch dargestellt. Im einzelnen zeigen:
- Figur 1:: eine Fügeeinrichtung in einer Seitenansicht,
- Figur 2:: eine schematische Darstellung der Vermessung eines stegförmigen Unterteils,
- Figur 3:: eine schematische Darstellung des verdeckten Schweißens eines aufgelegten Oberteils,
- Figur 4 und 5:: Darstellungen eines Verbund-Werkstücks und seiner Teile,
- Figur 6:: eine schematische Draufsicht auf eine Fügestation,

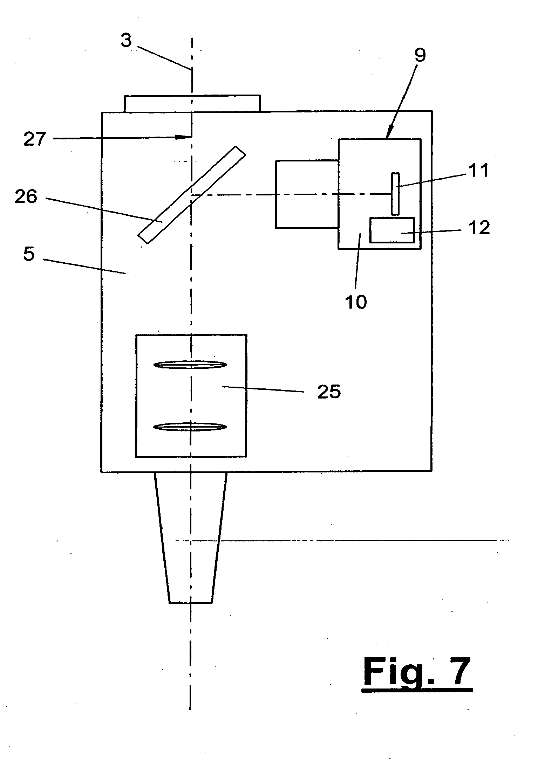

- Figur 7:: eine schematische Darstellung eines Strahlkopfes mit einer integrierten Messeinrichtung,
- Figur 8:: eine schematische Darstellung eines Sichtfensters oder Messfelds der Messeinrichtung und
- Figur 9:: eine Draufsicht auf das zu fügende Werkstückunterteil mit mehreren Stellungen des Messfensters.

Die Erfindung betrifft ein Verfahren und eine Fügeeinrichtung (1) zum Fügen von Werkstücken (15) mit mindestens einem energiereichen Strahl (3). Die Erfindung betrifft ferner eine Fügestation, die mit ein oder mehreren solcher Fügeeinrichtungen (1) ausgerüstet ist.

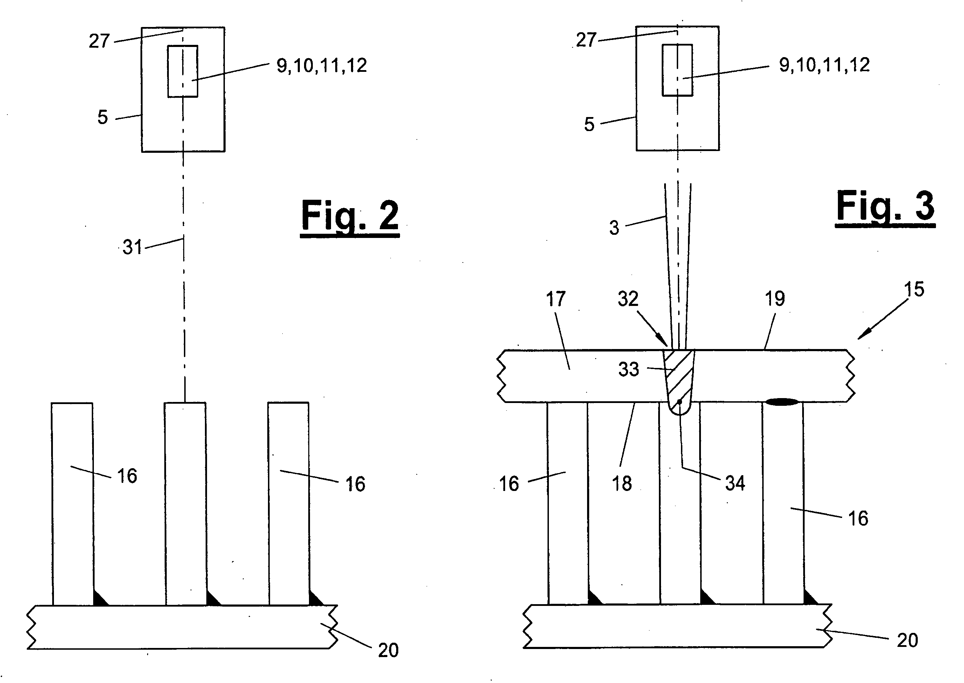

Das Werkstück (15) wird durch Fügen mindestens eines sog. Unterteils (16) und mindestens eines Oberteils (17) gebildet. Das Oberteil (17) liegt aus der Einfallrichtung des energiereichen Strahls (3) her gesehen über dem Unterteil (16) und deckt dieses ab. Der Strahl (3) kann gemäß Figur 3 mit einer vertikalen Ausrichtungskomponente von oben her einfallen. Er kann alternativ auch von der Seite oder von unten her einfallen, wobei das Unter- und Oberteil (16,17) entsprechend gedreht werden und eine liegende oder auf dem Kopf stehende Anordnung haben.

Der energiereiche Strahl (3) kann im Fügeprozess normal zur beaufschlagten Werkstückoberfläche einfallen und während der Bahnverfolgung entsprechend nachgeführt werden. Er kann alternativ mit einem von 90° abweichenden Einstrahlwinkel zur Werkstückoberfläche und damit schräg zu ihr einfallen.

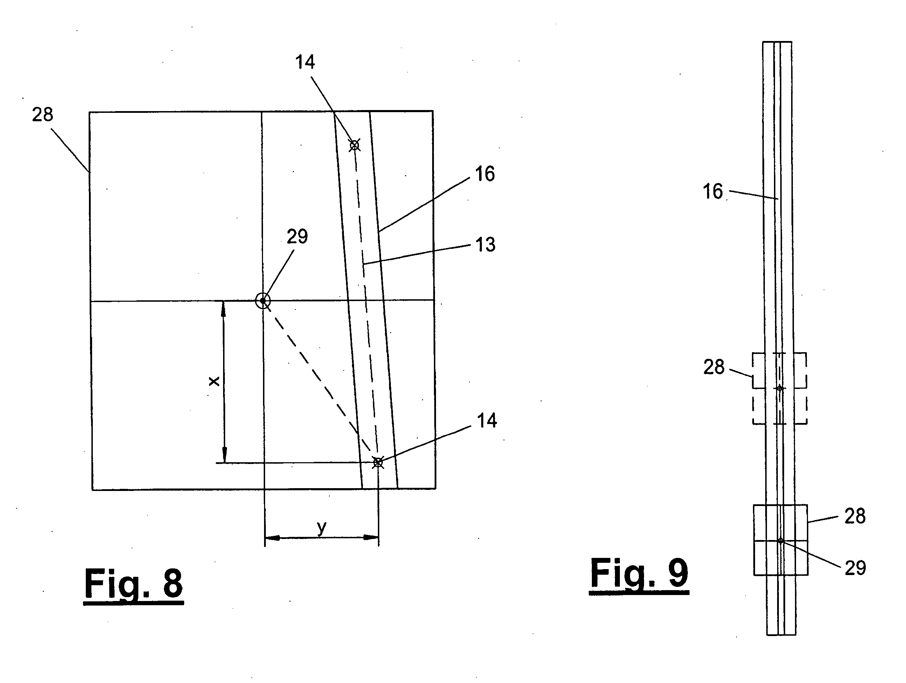

Das Unterteil (16) des Verbundwerkstücks (15) hat eine schmale oder dünne Form und kann z.B. die Gestalt eines schlanken abstehenden Steges besitzen. Ein solcher Steg kann leistenförmig sein und eine größere durchgehende Länge haben, wie sie z.B. in Figur 9 dargestellt ist. Der Steg kann alternativ auch kürzer sein und eine Art Zinnenprofil haben. Unter einem Steg wird im Sinne der Erfindung auch ein Buckel oder eine sonstige dünne oder schlanke Erhebung verstanden, die eine kleine Oberfläche für die Fügeverbindung und die Anbindungsfläche zum Oberteil (17) besitzt. Die Oberseite des Stegs kann eben bzw. flach, gewölbt oder in anderer Weise profiliert sein. Das Unterteil (16) kann auch mehrere Stege nebeneinander oder in einer anderen beliebigen Zuordnung haben, die z.B. an einem Stützelement (20), z.B. einer Bodenplatte, angeordnet und z.B. angeschweißt sind.

Das Oberteil (17) des Verbundwerkstücks (15) kann eine größere Breitenabmessung als das Unterteil (16) haben und deckt dieses zumindest im Fügebereich ab, so dass der Fügebereich am Unterteil (16) aus der Einfallsrichtung des Strahls her nicht mehr sichtbar ist. Das Oberteil (17) kann plattenförmig sein und ebene Oberflächen aufweisen. Es kann alternativ eine gebogene oder profilierte Form haben, wobei der Kontaktbereich an das für die Fügeverbindung vorgesehene freie Ende des Stegs oder Unterteils (16) und dessen Formgebung und eventuelle Kontur angepasst ist. Im gezeigten Ausführungsbeispiel liegt ein plattenförmiges Oberteil (17) plan auf der ebenen Stegoberfläche.

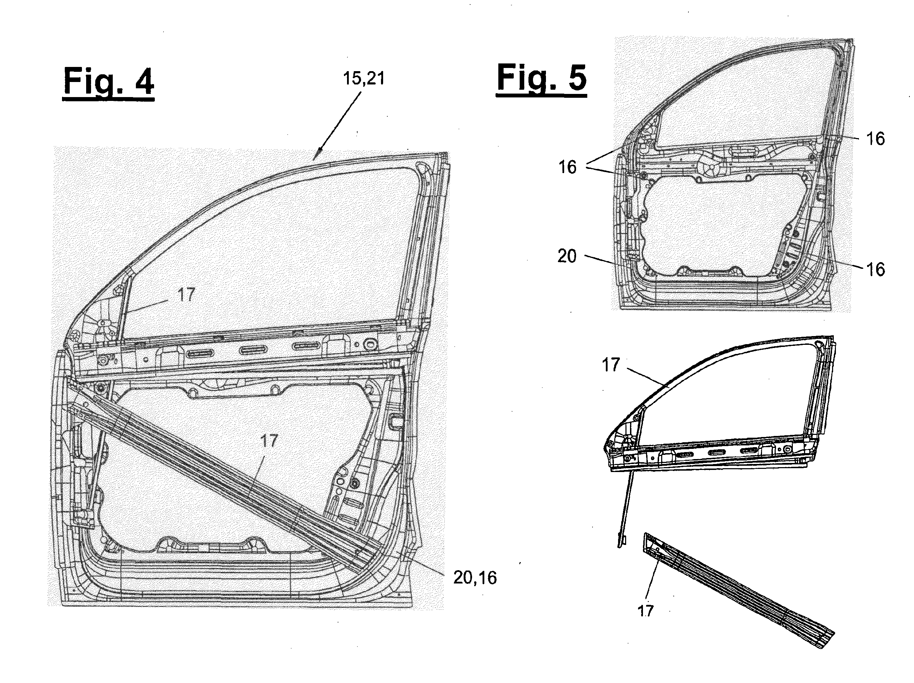

Figur 4 und 5 verdeutlichen ein Ausführungsbeispiel eines Verbund-Werkstücks (15). Dieses kann z.B. ein Bauteil (21) eines Fahrzeugs, insbesondere ein Karosserieteil, sein. In Figur 4 ist z.B. eine mehrteilige Innenstruktur einer Fahrzeugtüre dargestellt, die aus den in Figur 5 gezeigten Einzelteilen, nämlich dem Innenblech mit dem Unterteil (16) und dem Fensterrahmen sowie dem diagonalen Aufprallträger besteht, die beide ein Oberteil (17) bilden. Das Innenblech ist ein Stützelement (20) und trägt mehrere hoch stehende und das Unterteil (16) bildende Stege, die einzeln und stellenweise vorhanden sein können, die aber auch rahmenartig an ein oder mehreren Seiten um die Fenster- oder Wandöffnungen umlaufen können. Auf den Stegen (16) werden die Oberteile (17) in der nachfolgend beschriebenen Weise verdeckt oder blind gefügt. Die Anordnung kann auch umgekehrt sein, wobei die Stege (16) sich am Fensterrahmen sowie dem diagonalen Aufprallträger befinden und das Innenblech das Oberteil (17) bildet.

Der energiereiche Strahl (3) kann in beliebig geeigneter Weise ausgebildet sein. Im gezeigten Ausführungsbeispiel handelt es sich um einen Lichtstrahl, insbesondere um einen Laserstrahl. Alternativ kann es ein Elektronenstrahl oder ein sonstiger energiereicher Strahl sein. Der Strahl wird von einer Strahlquelle (4), z.B. einer Laserquelle, erzeugt und über geeignete Leitungen, z.B. flexible Lichtfaserkabel, einem Strahlkopf (5) zugeführt und von diesem zum Werkstück (15) bzw. dessen Teilen (16,17) emittiert. Der Strahl (3) wird vom Strahlkopf (5) gebündelt oder fokussiert. Hierbei können auch mehrere Strahlen (3) erzeugt und nebeneinander emittiert werden.

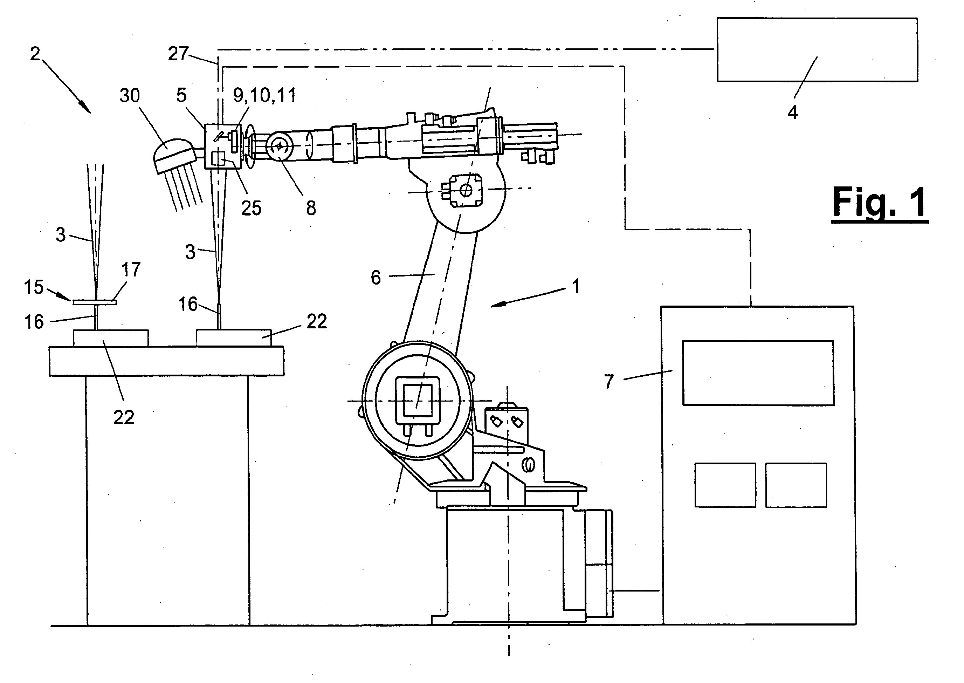

Der Strahlkopf (5) ist im gezeigten Ausführungsbeispiel als Laserkopf ausgebildet und wird von einem mehrachsigen Manipulator (6) geführt, der eine Manipulatorsteuerung (7) hat. Der Manipulator (6) kann mehrere rotatorische und/oder translatorische Achsen haben. Im gezeigten Ausführungsbeispiel kommt ein Gelenkarmroboter mit sechs oder mehr Achsen zum Einsatz. Der Manipulator (6) besitzt eine Manipulatorhand (8), die ihrerseits mehrere Achsen haben kann. Im gezeigten Ausführungsbeispiel hat die Hand (8) drei orthogonale Drehachsen, deren Beweglichkeit in Figur 1 durch Pfeile verdeutlicht ist. Am Abtriebsflansch der Hand (8) ist der Strahlkopf (5) befestigt.

Der Strahlkopf (5) wird vom Manipulator (6) mit einem größeren Abstand gegenüber den Werkstückteilen (16,17) gehalten und geführt. Der Laserkopf (5) ist hierbei als Remote-Laser ausgebildet und hat keinen Berührungskontakt zu den Werkstückteilen (16,17). Durch den Arbeitsabstand, der z.B. mehr als 250 mm, vorzugsweise ca. 500 mm oder mehr beträgt, kann der Strahl (3) winkelig ausgelenkt und durch diese Winkelbewegung entlang einer Fügebahn (13) gegenüber den Werkstückteilen (16,17) bewegt werden.

Im gezeigten Ausführungsbeispiel des Laserschweißens ist die Fügebahn (13) eine Schweißbahn oder Schweißnaht, die sich längs des stegartigen Unterteils (16) erstreckt und z.B. in dessen mittleren Bereich verläuft. Die Fügebahn (13) hat vordere und hintere Endpunkte (14). Es kann sich um eine über die Steglänge durchgehende Fügebahn (13) handeln. Alternativ ist eine unterbrochene Fügebahn (13), z.B. eine Steppnaht, möglich. Die Fügebahn (13) kann einen geraden Verlauf haben. Sie kann alternativ mäandrieren oder einen anderweitig gekrümmten Verlauf haben. Am Werkstück (15,16,17) bestehen entsprechende durchgehende oder unterbrochene Fügebereiche, insbesondere Schweißbereiche.

Der Strahlkopf (5) besitzt eine optische Einrichtung (25) im Strahlengang (27) des Strahls (3). Diese kann unterschiedlich ausgebildet sein. Sie kann eine Fokussiereinrichtung beinhalten, die z.B. aus einer Linsengruppe besteht, mit welcher der austretende Strahl (3) fokussiert wird. Die optische Einrichtung (25) kann alternativ oder zusätzlich andere Optikelemente, z.B. Spiegel, aufweisen. Die genannten optischen Elemente können stationär oder beweglich angeordnet sein. Die Fokussiereinrichtung kann z.B. gekrümmte Spiegel aufweisen. Schwenkbare Spiegel können auch als sog. Scannereinrichtung zur Winkelablenkung des Strahls (3) benutzt werden.

Die optische Einrichtung (25) kann eine feste Brennweite haben. Sie kann alternativ eine veränderliche Brennweite besitzen, die während des Fügeprozesses durch eine geeignete Verstelleinrichtung variiert werden kann. Hierbei kann auch ein Autofokus-System realisiert werden. Brennweitenänderungen sind z.B. durch Lageänderungen von Linsen und/oder einem Faserstecker bzw. einem Einkoppelpunkt des Strahls (3), durch Einsatz von ein oder mehreren Streulinsen, durch Lageänderung von Spiegeln, Krümmungsänderungen von Spiegeln oder dergleichen möglich.

Die optische Einrichtung (25) kann ferner eine Einrichtung zur Veränderung der Größe des Fokusdurchmessers und/oder des Brennflecks des Strahls (3) an dessen Auftreffpunkt an der Werkstückoberfläche oder an der Fügestelle aufweisen. Die optische Einrichtung (25) kann z.B. entsprechend der WO 2006/015795 A1 ausgebildet sein.

Die Fügeeinrichtung (1) weist ferner eine Messeinrichtung (9) auf, die vom Manipulator (6) mitgeführt wird. Die Messeinrichtung ist in Emissionsrichtung des Strahls (3) ausgerichtet und hat eine mit der Strahlrichtung fluchtende oder parallel dazu verlaufende Messrichtung. Günstigerweise ist die Messeinrichtung (9) im Strahlkopf (5) integriert oder in dessen Bereich angebracht. Die Messeinrichtung (9) ist in der in Figur 1 angedeuteten Weise mit der Manipulatorsteuerung (7) durch eine Leitung oder drahtlos verbunden.

Die Messeinrichtung (9) ist als optische Erfassungseinrichtung (10) ausgebildet. Diese kann eine unterschiedliche Ausbildung und Funktion haben. Im gezeigten Ausführungsbeispiel ist sie als Digitalkamera ausgeführt und besitzt eine Bildaufnahmeeinrichtung (11), die z.B. als Bildsensor mit einer dichten Pixelmatrix und einer hohen Auflösung gestaltet ist. Dies kann z.B. ein CCD- oder CMOS-Chip sein, der ggf. auch dynamisch aufnehmen und messen kann. Mit dem Bildsensor kann mindestens ein Bild des Messbereichs über ein in Figur 8 gezeigtes Sichtfenster oder Messfeld aufgenommen werden. Die ein oder mehreren Bilder können von der Messeinrichtung (9) gespeichert und über geeignete Schnittstellen in Dateiform oder als Ausdruck oder dgl. ausgegeben werden. Außerdem kann von der optischen Erfassungseinrichtung (10) der Abstand des Unterteils (16), z.B. bezogen auf den Tool-Center-Point der Erfassungseinrichtung (10), ermittelt werden.

Die optische Erfassungseinrichtung (10) weist ferner eine Bildauswertung (12) auf, mit der das im Sichtfenster (28) optisch erscheinende stegartige Unterteil (16) erfasst und vermessen werden kann. Die Bildauswertung (12) kann die zum Fügen relevanten Bereiche und Bezugspunkte des Unterteils (16) erfassen und nach ihrer Größe, insbesondere ihrer Breite, sowie nach ihrer Form, Lage und Ausrichtung vermessen. Die Erfassung und Vermessung erfolgt über gut erkennbare und lokalisierbare Formmerkmale des Unterteils (16), z.B. eine oder beide obere Längskanten an den freien Enden des Stegs. Alternativ oder zusätzlich können andere Formmerkmale erfasst werden.

Für die Erfassung und Vermessung ist dem Sichtfenster (28) ein geeignetes Koordinatenbezugssystem zugeordnet. Beispielsweise kann im Sichtfenster (28) an zentraler oder anderer geeigneter Stelle ein Strahlpunkt (29) angeordnet sein, der mit dem Strahlengang (27) des energiereichen Strahls (3) fluchtet. Im Strahlpunkt (29) kann auch ein Fadenkreuz aufgespannt sein. Der Strahlpunkt (29) kann den Bezugspunkt zur Ermittlung und Vermessung der relevanten Bezugspunkte oder Konturen des Unterteils (16) bilden. Die Positionswerte des Manipulators (6) und des Tool-Center-Points der optischen Erfassungseinrichtung (10) können dabei zur Ermittlung absoluter Positionsdaten im Raum herangezogen werden.

Die Vermessung kann über die gesamte Länge des Fügebereichs am Unterteil (16) oder abschnittsweise oder punktuell an einer oder an mehreren Fügestellen geschehen. Bei der Vermessung können die räumliche Lage und der Verlauf des Unterteils (16) erfasst werden. Außerdem kann bei der Vermessung die Form und Größe des Unterteils (16) erfasst werden. Insbesondere kann die Breite des Fügebereichs, z.B. die dortige Stegbreite bzw. Blechdicke, gemessen werden. Auch evtl. Teile- und Stegverformungen, z.B. Schräglagen, Einbuchtungen etc. können messtechnisch erfasst werden. Bei der Vermessung werden eindeutige, gut erkennbare Formmerkmale im aufgenommenen Bild mit einem Bildauswertungsprogramm ermittelt, wobei deren relative oder absolute Ortskoordinaten ermittelt werden. Aus dem auswertenden Vergleich relevanter Formmerkmale, z.B. paralleler Längskanten an der Stegoberseite kann die Breite des vorgesehenen Fügebereichs, z.B. die örtliche Stegbreite, bestimmt werden, indem z.B. der Kantenabstand berechnet wird.

Von der Bildauswertung (12) kann nicht nur das Unterteil (16) im Sichtfenster (28) erfasst und vermessen werden. Die Bildauswertung (12) kann außerdem anhand dieser Messdaten die Soll-Lage der vom Strahl (3) zu verfolgenden Fügebahn (13) anhand vorgegebener Kriterien, z.B. eine Mittellage an der Stegoberfläche, ermitteln. Die Messeinrichtung (9) oder ggf. die Robotersteuerung (7), z.B. die Bildauswertung (12), kann zu diesem Zweck eine geeignete Recheneinrichtung mit einem Programm nebst Speicher und Schnittstellen zur Ein- und Ausgabe von Daten aufweisen.

Bei der Vermessung kann ferner anhand der ermittelten Größe, insbesondere Breite, des Fügebereichs der hierfür geeignete oder erforderliche Fokus- oder Brennfleckdurchmesser von der Messeinrichtung (9) oder ggf. der Robotersteuerung (7) in der nachfolgend erläuterten Weise bestimmt werden. Die Messeinrichtung (9) oder ggf. die Robotersteuerung (7), z.B. die Bildauswertung (12), kann hierfür ein geeignetes Programmteil aufweisen. Dieser Durchmesser kann beim Fügeprozess eingestellt werden, z.B. über die optische Einrichtung (25) und deren Verstelleinrichtung. Die Messeinrichtung (9) oder ggf. die Robotersteuerung (7) können hierzu mit dieser Verstelleinrichtung zu Steuerungszwecken verbunden sein.

Ferner ist während des Strahlfügens online eine Prozessbeobachtung möglich. Hierdurch kann der Prozessort selbst, also die Arbeitsstelle (32) und die dortige Dampfkapillare oder das Plasma beobachtet und z.B. nach der Farbentwicklung ausgewertet werden. Ferner kann hinter der Arbeitsstelle (32) die Fügenaht betrachtet und auf ihre Qualität geprüft werden.

Die optische Erfassungseinrichtung (10) ist im Strahlkopf (5) angeordnet und in den Strahlengang (27) des energiereichen Strahls (3) mittels einer Einkopplung (26) fluchtend eingekoppelt. Die Einkopplung (26) kann z.B. einen teildurchlässigen, geneigten Spiegel im Strahlengang (3) aufweisen, der das Bild des Messfelds zur optischen Erfassungseinrichtung (10) lenkt und den Strahl (3) durchtreten lässt. Die Spiegelfunktion kann auch umgekehrt sein, wobei der Strahl (3) zum Austritt am Strahlkopf (5) gelenkt wird.

Zur Vermessung wird der Strahlkopf (5) mit der Messeinrichtung (9) vom Manipulator (6) an einer vorgegebenen Stelle gegenüber dem Unterteil (16) positioniert, wobei ein Ortsbezug zu einem Koordinatensystem des Manipulators (6) und zum prozessrelevanten Tool-Center-Point (TCP) des Strahlkopf (5) hergestellt wird. Bei der Vermessung können die relevanten Werkstückdaten, insbesondere Form, Lage und Ausrichtung des Unterteils (16) aufgenommen werden. Ferner wird festgestellt, ob der Strahlpunkt (29) sich an der vorgesehenen Stelle oder Lagebeziehung zum Unterteil (16) befindet.

Mit der Vermessung kann das Unterteil (16) und/oder die zu verfolgende Fügebahn (13) gesucht werden. Alternativ kann eine vorgegebene Fügebahn in der Manipulatorsteuerung (7) programmiert und gespeichert sein. Bei der Vermessung wird festgestellt, ob Lageabweichungen zwischen der programmierten und der ermittelten Fügebahn (13) vorhanden sind, wobei die Programmierung entsprechend geändert und die zu verfolgende Fügebahn (13) nach dem Messergebnis ausgerichtet und gespeichert wird. Bei der Vermessung kann außerdem eine Bauteilprüfung auf evtl. Fehler, z.B. Verzüge oder andere Verformungen, des Unterteils (16) im Fügebereich erfolgen.

Die Messeinrichtung (9) ist mit der Manipulatorsteuerung (7) signaltechnisch verbunden und übermittelt dieser die Mess- und Auswertedaten. Ggf. kann die Bildauswertung auch in der Manipulatorsteuerung (7) erfolgen.

Falls das Messfeld (28) kleiner als der Fügebereich ist, müssen am Unterteil (16) gemäß Figur 9 mehrere Messungen vorgenommen werden, wobei der Manipulator (6) die Messeinrichtung (9) nacheinander an entsprechenden Messstellen positioniert.

Figur 2 verdeutlicht, wie die Messeinrichtung (9) gegenüber dem zu vermessenden Unterteil (16) positioniert wird. Hierbei ist außerdem ersichtlich, dass mehrere Stege (16) gemeinsam an einem Stützelement, z.B. einer Bodenplatte, angeordnet sein können. Bei der Vermessung kann ferner mit einem Pilotstrahl (31) gearbeitet werden, der z.B. ein sichtbarer Lichtstrahl ist und im Strahlengang (27) emittiert wird. Sein optisch sichtbarer Auftreffpunkt am Unterteil (16) kann messtechnisch erfasst werden. Der Pilotstrahl (31) kann z.B. ein Laserstrahl mit verringerter Energie oder ein sonstiger, in den Strahlengang (27) eingekoppelter Strahl sein.

Die Fügeeinrichtung (1) weist ferner eine vom Manipulator (6) mitgeführte Beleuchtungseinrichtung (30) auf, mit der der Messbereich am Unterteil (16) erhellt werden kann. Die Beleuchtungseinrichtung (30) ist in Figur 1 schematisch dargestellt. Sie kann beliebig ausgebildet und angeordnet sein und weist mehrere geeignete Leuchtelemente, z.B. Scheinwerfer oder dergleichen, auf. Mehrere Leuchtelemente können hierbei aus verschiedenen Richtungen auf den Messbereich strahlen und diesen weitgehend schattenfrei erhellen. Die Beleuchtungseinrichtung (30) kann am Strahlkopf (5) oder an der Hand (8) befestigt sein und ein rahmenartiges oder auslegerartiges Gestell besitzen, an dem die Leuchtelemente ggf. verstellbar angeordnet und dabei mit geeigneter Lage und Ausrichtung zum Messbereich positioniert und orientiert sind. Die Beleuchtungseinrichtung (30) kann seitlich vom Strahlkopf (5) oder der Hand (8) distanziert sein, wobei auch die Leuchtelemente einen gegenseitigen Abstand haben können.

Die Vermessung des auf einer Aufspannung (22) in einer vorgegebenen Lage positionierten Unterteils (16) bildet den ersten Prozessschritt. Hierbei werden alle vorgesehenen Fügebereiche komplett oder stellenweise vermessen, wobei ggf. zur Streckenbildung interpoliert wird. Im Verlauf, vor oder nach der Vermessung können außerdem zusätzliche Bearbeitungen, z.B. Fügen von Unterteilen (16) untereinander, Fügen weiterer Werkstückteile oder dgl. durchgeführt werden.

Anschließend wird in einem zweiten Prozessschritt das Oberteil (17) auf das Unterteil (16) gelegt und gespannt oder in anderer Weise fixiert. Dies kann von Hand oder mechanisch von einem Roboter oder dergleichen, z.B. auch vom Manipulator (6) mit einem entsprechenden Werkzeug, geschehen.

Im dritten Prozessschritt wird das Oberteil (17) an das Unterteil (16) gefügt, wobei der Strahl (3) entlang der gespeicherten Fügebahn (13) geführt und auf das Oberteil (17) gerichtet wird. Das Oberteil (17) liegt mit seiner Vorderseite (18) auf dem Unterteil (16). Der Strahl (3) wird von außen auf die Rückseite (19) des Oberteils (17) über der Fügestelle gerichtet, wobei die Teile (16) verdeckt oder blind gefügt werden. Der Strahl (3) kann in geeigneter Weise fokussiert werden. Hierdurch wird an der Arbeits- oder Fügestelle (32) das in Figur 3 gezeigte Schmelzbad (33) ausgebildet. Am rechten Steg (16) ist eine bereits geschaffene Fügeverbindung angedeutet.

Beim Blindschweißen von Werkstückteilen (16,17) wird der Fokus (34) des energiereichen Strahls (3) in geeigneter Weise positioniert, um einen korrekten und möglichst optimalen Energieeintrag an der Verbindungsstelle zu haben. Der Fokus (34) wird z.B. an diese Kontaktstelle oder Verbindungsstelle zwischen den Werkstückteilen (16,17) durch entsprechende Einstellung der optischen Einrichtung (25) mit ihrer Fokussiereinrichtung gelegt. Alternativ kann der Fokus (34) durch eine Änderung des Arbeitsabstands mittels einer Manipulatorbewegung verlagert werden. Der Fokus (34) kann sich alternativ auch etwas oberhalb oder unterhalb dieser Stelle befinden. Ein energiereicher Strahl (3), insbesondere ein Laserstrahl, hat außerdem je nach Strahlqualität einen Bereich in Strahllängsrichtung um den Fokuspunkt (34), in dem der Strahldurchmesser vergleichsweise konstant ist. Dieser Strahlbereich wird als Raleighlänge bezeichnet und kann z.B. zwischen +/- 2 mm und +/- 8 mm liegen. Dies hängt von der eingesetzten Strahlquelle (4), der optischen Einrichtung (25) und von anderen Faktoren ab. Der Fokuspunkt (34) kann in seiner Lage so eingestellt werden, dass die Kontakt- und Verbindungsstelle im Bereich der Raleighlänge liegt.

Vom Strahldurchmesser an Kontakt- und Fügestelle hängt u.a. der Energieeintrag ab. Vom Strahl -oder Fokusdurchmesser hängt wiederum der sich ergebende Durchmesser des Anbindequerschnitts ab. Der Strahldurchmesser im Fokus- bzw. Raleighbereich kann an die Blechstärke des Unterteils oder Stegs (16) angepasst werden, wobei sich auch eine Anpassung des Anbinde- oder Fügequerschnitts ergibt. Der Durchmesser des Anbinde- oder Fügequerschnitts sollte gleich oder kleiner als die Stegbreite sein.

Der Fokusdurchmesser und der Anbinde- oder Fügequerschnitt am T-Stoß können sehr klein sein. Bei einem Durchmesser des Fokus (34) oder des Raleighbereichs von z.B. 0,6 kann der zugehörige Durchmesser des Anbindequerschnitts ca. 0,9 mm betragen. Entsprechend dünn kann die Stegbreite sein und z.B. ca. 1 mm betragen. Bei einer Stegbreite von z.B. 0,8 mm sind ein Durchmesser des Anbindequerschnitts von 0,6 mm und eine Strahldurchmesser von ca. 0,4 mm vorteilhaft. Bei einer größeren Stegbreite von z.B. 1,5 mm können 1,2 mm Durchmesser des Anbindequerschnitts und 0,8 mm Strahldurchmesser günstig sein. Das Oberteil (17) kann eine gleiche oder größere Dicke haben, die z.B. ca 0,8 bis 1,5 mm beträgt.

Der Strahl (3) kann zur Verfolgung der Fügebahn (13) beim Fügen ausschließlich oder im wesentlichen durch eine Winkelbewegung entlang der Bahn (13) ausgelenkt und geführt werden. Dies kann z.B. durch die optische Einrichtung (25) geschehen, wobei diese z.B. eine Scanneroptik mit ein oder mehreren schwenkbaren Spiegeln oder anderen Optikelementen aufweist.

Alternativ oder zusätzlich kann die Strahlauslenkung durch eine Drehung der Manipulatorhand (8) um ein oder mehrerer ihrer rotatorischen Achsen erfolgen.

Die Brennweite der optischen Einrichtung (25) beträgt vorzugsweise ca. 500 mm und kann auch wesentlich größer sein, z.B. 1.000 mm, 1.500 mm und mehr. Sie kann auch kleiner sein und z.B. 250 mm betragen. Dementsprechend groß ist auch der Arbeitsabstand. Bei einem solchen Remote-Laser (5) mit langer Brennweite von z.B. mehr als 500 mm kann der Strahl (3) durch kleine Winkelauslenkungen große Wege mit seinem Auftreffpunkt am Oberteil (17) zurücklegen und sehr schnell und genau geführt und gesteuert werden. Durch die Winkelauslenkung können sich die Einfallwinkel des Strahls (3) am Oberteil (17) ändern.

In Abhängigkeit vom Auslenkwinkel oder auch vom Einstrahlwinkel kann die Strahlleistung und/oder die Bahngeschwindigkeit des Strahls (3) bzw. die Schweißgeschwindigkeit nachgeführt werden, um die gewünschte Streckenenergie am Oberteil (17) einzubringen. Dies ist auch in Verbindung mit anderen Strahlführungstechniken möglich. Außerdem kann über ein Autofokussystem die Brennweite und ggf. auch der Fokusdurchmesser in Abhängigkeit vom Auslenk- oder Einfallwinkel nachgeführt werden. Die Lage des Fokus (34) in Strahlrichtung am Werkstück (15,16,17) kann über eine Brennweitenverstellung der optischen Einrichtung (25) und/oder durch eine Änderung des Arbeitsabstands, z.B. durch eine Bewegung des Manipulators (6) bewirkt werden.

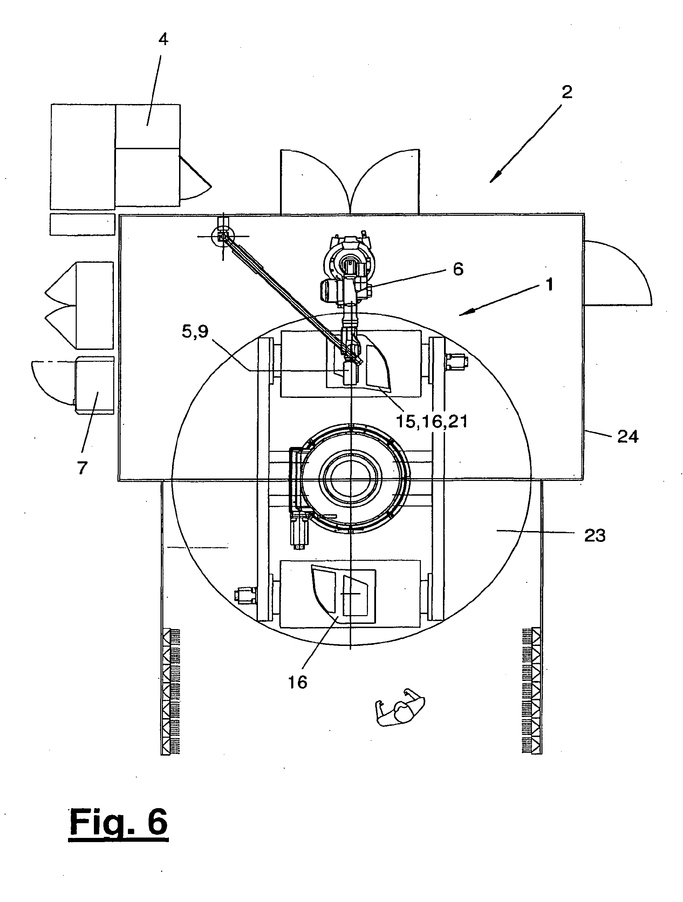

Figur 6 zeigt schematisch die Ausbildung einer Fügestation (2), z.B. einer Laserschweißstation. Die Station (2) ist außenseitig von einer Umgrenzung oder einer Schutzeinrichtung, z.B. einer Laserkabine (24), umgeben. Die Fügeeinrichtung (1) ist weitgehend im Innenraum angeordnet, wobei sich die Laserquelle (4) außerhalb befinden kann und über eine flexible Leitung mit einem drehbaren Galgen mit dem Remote-Laserkopf (5) am Manipulator (6) verbunden ist. Die Fügestation (2) weist ferner eine Bauteilzuführung (23) auf, die z.B. als Drehtisch mit zwei oder mehr Spannstellen ausgebildet ist, an dem zumindest die Werkstückteile (16) von einem Werker eingelegt werden. An dieser Stelle können auch die fertig geschweißten Verbundwerkstücke (15) wieder entnommen und zur Weiterverarbeitung abtransportiert werden. Das Auflegen der Oberteile (17) nach der Vermessung der Unterteile (16) kann innerhalb der Station durch den Manipulator (6) oder eine andere automatische Einrichtung erfolgen. Alternativ kann nach der Vermessung die Bauteilzuführung (23) drehen und der Werker legt das Oberteil (17) auf und spannt es, während an der anderen Spannstelle das nächste Unterteil (16) vermessen oder gefügt wird.

Abwandlungen der gezeigten und beschriebenen Ausführungsformen sind in verschiedener Weise möglich. Das Unterteil (16) kann eine abgewinkelte oder gekrümmte Form haben, wobei die Stegbreite sich auch verändern kann. Das Unterteil (16) kann mehrere Stege haben und z.B. als U-oder W-Profil ausgebildet sein. Ferner kann das Unterteil (16) eine offene oder geschlossene Rahmenform besitzen. Es kann auch mit weiteren Werkstückteilen verbunden sein.

Der Strahl (3) kann entlang der Fügebahn (13) auch auf andere Weise als durch Strahlablenkung geführt werden. Dies ist z.B. durch eine Fahr- und/oder Schwenkbewegung des Manipulators (6) mit seinen anderen Achsen möglich. Der Einfallwinkel des Strahls (3) am Oberteil (17) kann dabei konstant bleiben oder sich nur wenig ändern. Der Einfallwinkel kann insbesondere senkrecht zur betreffenden Werkstückoberfläche ausgerichtet sein. Er kann alternativ auch eine Schräglage haben und z.B. längs oder quer zum Stegverlauf geneigt sein.

Konstruktive Abwandlungen sind hinsichtlich der Gestaltung des Manipulators (6), des Strahlkopfs (5) und der Messeinrichtung (9) möglich.

### BEZUGSZEICHENLISTE

- 1: Fügeeinrichtung, Schweißeinrichtung
- 2: Fügestation, Schweißstation
- 3: Strahl, Laserstrahl
- 4: Strahlquelle, Laserquelle
- 5: Strahlkopf, Laserkopf, Remote-Laser
- 6: Manipulator, Roboter
- 7: Manipulatorsteuerung
- 8: Hand, Manipulatorhand
- 9: Messeinrichtung
- 10: optische Erfassungseinrichtung, Kamera
- 11: Bildaufnahmeeinrichtung
- 12: Bildauswertung
- 13: Fügebahn, Schweißnaht
- 14: Endpunkt
- 15: Werkstück, Verbundteil
- 16: Unterteil, Steg
- 17: Oberteil, Deckplatte
- 18: Vorderseite
- 19: Rückseite
- 20: Stützelement, Bodenplatte
- 21: Bauteil, Karosserieteil
- 22: Aufspannung
- 23: Bauteilzuführung
- 24: Kabine, Laserkabine
- 25: optische Einrichtung
- 26: Einkopplung, Spiegel
- 27: Strahlengang
- 28: Sichtfenster
- 29: Strahlpunkt, Auftreffpunkt
- 30: Beleuchtungseinrichtung
- 31: Strahl, Pilotstrahl
- 32: Arbeitsstelle
- 33: Schmelzbad
- 34: Fokus

## Patentansprüche

1. Verfahren zum Fügen von Werkstücken (15) mit einem von einem mehrachsigen Manipulator (6) geführten energiereichen Strahl (3), insbesondere einem Laserstrahl,
- wobei ein Oberteil (17) des Werkstücks (15) mit mindestens einem stegartigen Unterteil (16) gefügt wird,
- wobei zunächst das Unterteil (16) mit einer vom Manipulator (6) mitgeführten Messeinrichtung (9), die eine optische, in den Strahlengang (27) des Strahls (3) eingekoppelte Erfassungseinrichtung (10) aufweist, vermessen und die Größe des vorgesehenen Fügebereichs ermittelt wird,
- wobei der Messbereich am Unterteil (16) durch eine vom Manipulator (6) mitgeführte Beleuchtungseinrichtung (30) erhellt wird, die mehrere Leuchtelemente aufweist, die aus verschiedenen Richtungen auf den Messbereich strahlen
- und wobei die mit dem Strahl (3) zu verfolgende Fügebahn (13) nach dem Messergebnis ausgerichtet und gespeichert wird,
- wobei anschließend das Oberteil (17) aufgelegt und danach an das Unterteil (16) gefügt wird,
- wobei der Strahl (3) entlang der gespeicherten Fügebahn (13) geführt und auf die Rückseite (19) des Oberteils (17) gerichtet wird und
- wobei der Strahl (3) von einem manipulatorgeführten Strahlkopf (5) mit Abstand zur Arbeitsstelle (32) emittiert wird, wobei der Strahlkopf (5) eine optische Einrichtung (25) mit einer Brennweite von 250 mm oder mehr, vorzugsweise von 500 mm oder mehr aufweist.

2. Verfahren nach Anspruch 1, **dadurch gekennzeichnet, dass** das Oberteil (17) mit der Vorderseite (18) auf das Unterteil (16) gelegt und der Strahl (3) auf die Rückseite (19) des Oberteils (17) gerichtet wird.

3. Verfahren nach Anspruch 1 oder 2, **dadurch gekennzeichnet, dass** das Unterteil (16) nach Form, Lage und Ausrichtung vermessen wird, wobei aus dem Messergebnis die Soll-Lage der Fügebahn (13) ermittelt wird.

4. Verfahren nach Anspruch 1, 2 oder 3, **dadurch gekennzeichnet, dass** beim Vermessen das Unterteil (16) und/oder die Soll-Lage der Fügebahn (13) gesucht werden.

5. Verfahren nach Anspruch 1, 2 oder 3, **dadurch gekennzeichnet, dass** das Messergebnis mit vorprogrammierten Daten des Unterteils (16) und/oder der Fügebahn (13) verglichen wird und bei Abweichungen die vorprogrammierten Daten korrigiert werden.

6. Verfahren nach einem der vorhergehenden Ansprüche, **dadurch gekennzeichnet, dass** bei der Vermessung des Fügebereichs die geeignete Fokusgröße bestimmt und beim Fügeprozess eingestellt wird.

7. Verfahren nach einem der vorhergehenden Ansprüche, **dadurch gekennzeichnet, dass** von der Messeinrichtung (9) das Unterteil (16) mit einer in den Strahlengang (27) des Strahls (3) eingekoppelten optischen Erfassungseinrichtung (10) bildmäßig erfasst und vermessen wird, wobei aus dem erfassten Bild die Form, Lage und Ausrichtung des Unterteils (16) mit einer Bildauswertung (12) ermittelt und an die Manipulatorsteuerung (11) übermittelt wird.

8. Verfahren nach einem der vorhergehenden Ansprüche, **dadurch gekennzeichnet, dass** der Strahl (3) zur Bahnverfolgung beim Fügen durch eine optische Einrichtung (25), insbesondere eine Scanneroptik oder durch eine Drehung einer Manipulatorhand (8) um eine oder mehrere Achsen ausgelenkt wird.

9. Fügeeinrichtung zur Durchführung des Verfahrens nach einem der Ansprüche 1 bis 8, **dadurch gekennzeichnet, dass** die Fügeeinrichtung (1) eine Strahlquelle (4) und mindestens einen mehrachsigen Manipulator (6) mit einem Strahlkopf (5) zur Emission mindestens eines energiereichen Strahls (3), insbesondere eines Laserstrahls, mit Abstand zur Arbeitsstelle (32) und mit einer mitgeführten Messeinrichtung (9) aufweist, die mit der Manipulatorsteuerung (7) verbunden ist, wobei die Messeinrichtung (9) eine in den Strahlengang (27) eingekoppelte optische Erfassungseinrichtung (10) aufweist und am Manipulator (6) eine Beleuchtungseinrichtung (30) zum Erhellen des Messbereichs angeordnet ist, die mehrere Leuchtelemente aufweist, die aus verschiedenen Richtungen auf den Messbereich strahlen und wobei der Strahlkopf (5) eine optische Einrichtung (25) mit einer Brennweite von 250 mm oder mehr, vorzugsweise von 500 mm oder mehr aufweist.

10. Fügeeinrichtung nach Anspruch 9, **dadurch gekennzeichnet, dass** die optische Erfassungseinrichtung (10) eine Bildaufnahmeeinrichtung (11) und eine Bildauswertung (12) aufweist.

11. Fügeeinrichtung nach Anspruch 9 oder 10, **dadurch gekennzeichnet, dass** die Bildauswertung (12) ein Programmteil zur Bestimmung der Größe, insbesondere der Breite, des aufgenommenen Fügebereichs und ein Programmteil zur Bestimmung der geeigneten Fokusgröße am Fügebereich aufweist.

12. Fügeeinrichtung nach einem der Ansprüche 9 bis 11, **dadurch gekennzeichnet, dass** die Strahlquelle (4) mindestens einen energiereichen Laserstrahl (3) und ggf. einen schwächeren Pilotstrahl (31) zur Vermessung emittiert.

13. Fügeeinrichtung nach einem der Ansprüche 9 bis 12, **dadurch gekennzeichnet, dass** die optische Einrichtung (25) eine veränderliche Brennweite und eine Verstelleinrichtung zur Veränderung der Brennweite aufweist, die mit der Messeinrichtung (9) verbunden ist.

## Claims

1. Method for joining workpieces (15) with the aid of a high-energy beam (3) guided by a multi-axis manipulator (6), in particular a laser beam,
- an upper part (17) of the workpiece (15) being joined to at least one web-like lower part (16),
- initially the lower part (16) being measured with the aid of a measuring device (9), which is also guided by the manipulator (6) and has an optical detecting device (10) coupled into the beam path (27) of the beam (3), and the size of the envisaged joining area being determined,
- the measurement area on the lower part (16) being illuminated by an illuminating device (30) which is also guided by the manipulator (6) and has a plurality of luminous elements which shine onto the measurement area from various directions,
- and the joining web (13) to be followed by the beam (3) being aligned and stored after the measurement result,
- the upper part (17) subsequently being laid on and thereafter joined to the lower part (16),
- the beam (3) being guided along the stored joining web (13) and being directed onto the rear side (19) of the upper part (17), and
- the beam (3) being emitted by a manipulator-guided emitter head (5) at a distance from the working position (32), the emitter head (5) having an optical device (25) with a focal length of 250 mm or more, preferably of 500 mm or more.

2. Method according to Claim 1, **characterized in that** the upper part (17) is laid with the front side (18) onto the lower part (16), and the beam (3) is directed onto the rear side (19) of the upper part (17).

3. Method according to Claim 1 or 2, **characterized in that** the lower part (16) is measured in terms of shape, position and alignment, the desired position of the joining path (13) being determined from the measurement result.

4. Method according to Claim 1, 2 or 3, **characterized in that** the lower part (16) and/or the desired position of the joining web (13) is/are looked for during the measurement.

5. Method according to Claim 1, 2 or 3, **characterized in that** the measurement result is compared with preprogrammed data of the lower part (16) and/or the joining web (13), and the preprogrammed data are corrected in the event of deviations.

6. Method according to one of the preceding claims, **characterized in that** the suitable focal length is determined during the measurement of the joining area, and is set during the joining process.

7. Method according to one of the preceding claims, **characterized in that** the measuring device (9) images and measures the lower part (16) with the aid of an optical detecting device (10) coupled into the beam path (27) of the beam (3), the shape, position and alignment of the lower part (16) being determined from the acquired image with the aid of an image analyzing means (12) and being transmitted to the manipulator control (11).

8. Method according to one of the preceding claims, **characterized in that** in order to follow the web during joining, the beam (3) is deflected about one or more axes via an optical device (25), in particular a scanner optical system, or by rotating a manipulator hand (8).

9. Joining device for carrying out the method according to one of Claims 1 to 8, **characterized in that** the joining device (1) has a beam source (4) and at least one multi-axis manipulator (6) with an emitter head (5) for emitting at least one high-energy beam (3), in particular a laser beam, at a distance from the working position (32), and has a measuring device (9) which is also guided and is connected to the manipulator control (7), the measuring device (9) having an optical detecting device (10) coupled into the beam path (27), and having arranged on the manipulator (6) an illuminating device (30) for illuminating the measurement area which has a plurality of luminous elements which shine onto the measurement area from various directions, and the emitter head (5) having an optical device (25) with a focal length of 250 mm or more, preferably of 500 mm or more.

10. Joining device according to Claim 9, **characterized in that** the optical detecting device (10) has an imaging device (11) and an image analyzing means (12).

11. Joining device according to Claim 9 or 10, **characterized in that** the image analyzing means (12) has a programme part for determining the size, in particular the width, of the recorded joining area, and a programme part for determining the suitable focal size on the joining area.

12. Joining device according to one of Claims 9 to 11, **characterized in that** the beam source (4) emits at least a high-energy laser beam (3) and, if appropriate, a weaker pilot beam (31) for the measurement.

13. Joining device according to one of Claims 9 to 12, **characterized in that** the optical device (25) has a variable focal length and an adjusting device for varying the focal length which is connected to the measuring device (9).

## Revendications

1. Procédé d'assemblage de pièces usinées (15) avec un faisceau (3) riche en énergie guidé par un manipulateur (6) pluriaxial, notamment un faisceau laser ;
- une partie supérieure (17) de la pièce usinée (15) étant assemblée à au moins une partie inférieure (16) de type étai ;
- la partie inférieure (16) étant d'abord mesurée avec un dispositif de mesure (9) guidé conjointement par le manipulateur (6) et comportant un dispositif de détection (10) optique couplé dans le passage de faisceau (27) du faisceau (3) et la taille de la zone d'assemblage étant calculée ;
- la région de mesure située au niveau de la partie inférieure (16) étant éclairée par un dispositif d'éclairage (30) guidé conjointement par le manipulateur (6) et comportant plusieurs éléments d'éclairage éclairant la région de mesure à partir de différentes directions ; et
- la voie d'assemblage (13) à suivre avec le faisceau (3) étant orientée et mémorisée en fonction du résultat de mesure ;
- la partie supérieure (17) étant ensuite posée puis assemblée à la partie inférieure (16) ;
- le faisceau (3) étant guidé le long de la voie d'assemblage (13) mémorisée et orientée sur le côté arrière (19) de la partie supérieure (17) ; et
- le faisceau (3) étant émis depuis une tête de faisceau (5) guidée par le manipulateur placé à une certaine distance du lieu de traitement (32), la tête de faisceau (5) comportant un dispositif (25) optique avec une distance focale de 250 mm ou plus, de préférence de 500 mm ou plus.

2. Procédé selon la revendication 1, **caractérisé en ce que** la partie supérieure (17) est placée avec le côté avant (18) sur la partie inférieure (16) et que le faisceau (3) est orienté sur le côté arrière (19) de la partie supérieure (17).

3. Procédé selon la revendication 1 ou 2, **caractérisé en ce que** la partie inférieure (16) est mesurée en fonction de sa forme, de sa position et de son orientation, la position théorique de la voie d'assemblage (13) étant calculée à partir du résultat de mesure.

4. Procédé selon la revendication 1, 2 ou 3, **caractérisé en ce que** lors de la mesure, on recherche la partie inférieure (16) et/ou la position théorique de la voie d'assemblage (13).

5. Procédé selon la revendication 1, 2 ou 3, **caractérisé en ce que** le résultat de mesure est comparé à des données préprogrammées de la partie inférieure (16) et/ou de la voie d'assemblage (13) et qu'en cas d'écarts, les données préprogrammées sont corrigées.

6. Procédé selon l'une quelconque des revendications précédentes, caractérisé en ce lors de la mesure de la zone d'assemblage, la taille de foyer adaptée est déterminée et réglée lors du processus d'assemblage.

7. Procédé selon l'une quelconque des revendications précédentes, **caractérisé en ce que** la partie inférieure (16) est détectée en fonction de l'image et mesurée par le dispositif de mesure (9) à l'aide d'un dispositif de détection (10) optique couplé dans le passage de faisceau (27) du faisceau (3), sachant qu'à partir de l'image détectée, on calcule la forme, la position et l'orientation de la partie inférieure (16) à l'aide d'une analyse d'image (12) avant de transmettre ces éléments à l'élément de commande de manipulateur (11).

8. Procédé selon l'une quelconque des revendications précédentes, **caractérisé en ce que** le faisceau (3) est articulé pour le suivi de voie lors de l'assemblage par un dispositif optique (25), notamment un lecteur optique ou par une rotation d'une main de manipulateur (8) autour d'un ou de plusieurs axes.

9. Dispositif d'assemblage servant à mettre en oeuvre le procédé selon l'une quelconque des revendications 1 à 8, **caractérisé en ce que** le dispositif d'assemblage (1) comporte une source de faisceau (4) et au moins un manipulateur pluriaxial (6) avec une tête de faisceau (5) pour l'émission d'au moins un faisceau (3) riche en énergie, notamment d'un faisceau laser, à une certaine distance du lieu de traitement (32) et avec un dispositif de mesure (9) guidé conjointement relié à l'élément de commande de manipulateur (7), le dispositif de mesure (9) comportant un dispositif de détection (10) optique couplé dans le passage de faisceau (27) et un dispositif d'éclairage (30) étant disposé au niveau du manipulateur (6) pour éclairer la région de mesure, ledit dispositif comportant plusieurs éléments d'éclairage éclairant la région de mesure à partir de différentes directions et la tête de faisceau (5) comportant un dispositif optique (25) avec une distance focale de 250 mm ou plus, de préférence de 500 mm ou plus.

10. Dispositif d'assemblage selon la revendication 9, **caractérisé en ce que** le dispositif de détection (10) optique comporte un dispositif de prise d'image (11) et une analyse d'image (12).

11. Dispositif d'assemblage selon la revendication 9 ou 10, **caractérisé en ce que** l'analyse d'image (12) comporte une partie de programme pour déterminer la taille, notamment la largeur, de la zone d'assemblage prise et une partie de programme pour déterminer la taille de foyer adaptée au niveau de la zone d'assemblage.

12. Dispositif d'assemblage selon l'une quelconque des revendications 9 à 11, **caractérisé en ce que** la source de faisceau (4) émet à des fins de mesure au moins un faisceau laser (3) riche en énergie et le cas échéant un faisceau pilote (31) plus faible.

13. Dispositif d'assemblage selon l'une quelconque des revendications 9 à 12, **caractérisé en ce que** le dispositif optique (25) présente une distance focale variable et un dispositif de réglage servant à faire varier la distance focale, ledit dispositif étant relié au dispositif de mesure (9).
